# EUROPÄISCHE PATENTSCHRIFT

(11) **EP 3 661 176 B1**
(45) Veröffentlichungstag und Bekanntmachung des Hinweises auf die Patenterteilung: **02.03.2022**
(21) Anmeldenummer: 19210068.3
(22) Anmeldetag: 19.11.2019
(51) Int. Cl.: H04M 1/21, G02F 1/13, G06F 1/16, G02F 1/1335

(54) **MAGNETISCHER BLICKSCHUTZFILTER**
MAGNETIC PRIVACY FILTER
FILTRE DE CONFIDENTIALITÉ MAGNÉTIQUE

(30) Priorität: 30.11.2018 DE 102018130600
(43) Veröffentlichungstag der Anmeldung: 03.06.2020
(73) Patentinhaber: "DURABLE" HUNKE & JOCHHEIM GMBH & CO. KOMMANDITGESELLSCHAFT, 58636 Iserlohn (DE)
(72) Erfinder: Maier-Hunke, Horst-Werner, 58640 Iserlohn (DE)
(74) Vertreter: Beckord & Niedlich Patentanwälte PartG mbB

(56) Entgegenhaltungen:
- WO-A1-2018/166570
- DE-U1-202017 100 546
- US-A1- 2015 207 907
- US-A1- 2016 087 670

## Beschreibung

Die Erfindung betrifft einen Blickschutzfilter zur Befestigung an einem Bildschirm, ein Blickschutzfilterset mit zumindest einem ersten magnetisch wirksamen Element und einem dem ersten magnetisch wirksamen Element zugeordneten zweiten magnetisch wirksamen Element, ein Verfahren zur Herstellung eines Blickschutzfilters, ein Verfahren zur Befestigung eines Blickschutzfilters an einem Bildschirm, sowie ein elektronisches Gerät mit einem Blickschutzfilter.

Die Nutzung von elektronischen Geräten (wie z. B. Computer, Laptops, Tablets und Smartphones) ist mit der fortschreitenden Technologie- und Netzwerkentwicklung tägliche Praxis geworden. Diese Geräte werden häufig in öffentlichen Einrichtungen, wie etwa in öffentlichen Verkehrsmitteln, an Flughäfen, an Bahnhöfen oder in Büros verwendet. Bei einer öffentlichen Verwendung elektronischer Geräte ist es möglich, dass nicht autorisierte Personen die Anzeigefläche des Bildschirms einsehen können und somit ggf. Zugriff auf geheime Daten, wie etwa Betriebsgeheimnisse, Kontodaten oder Ähnliches erhalten. Um einem solchen "visuellen Hackerangriff" zu entgehen, kann ein Blickschutzfilter auf dem Bildschirm angebracht werden. Blickschutzfilter bestehen oft aus einem Folienlaminat mit zumindest einer Schicht aus senkrecht zu einer Bildschirmoberfläche verlaufenden Lamellen, die ein seitliches Einsehen des Bildschirms verhindern.

Für die effiziente Nutzung eines elektronischen Geräts mit angebrachtem Blickschutzfilter muss der Blickschutzfilter stabil am Bildschirm befestigt werden können. So kann der Blickschutzfilter beispielsweise auf einem Bildschirm aufgeklebt werden. Allerdings kann es dabei zu einer unerwünschten Blasenbildung zwischen Bildschirmoberfläche und Blickschutzfilter kommen. Des Weiteren erweist sich das Anbringen und Entfernen eines klebenden Blickschutzfilters auf einem elektronischen Gerät als mühselig. Zudem bleiben beim Entfernen des Blickschutzfilters oftmals unerwünschte Klebstoffreste auf der Bildschirmoberfläche zurück. Da viele Nutzer zwar im öffentlichen Raum einen Schutz ihrer Daten benötigen, privat aber einen von allen Seiten gut einsehbaren Bildschirm (z. B. für eine Gruppe von Menschen) bevorzugen, ist ein nichtklebender Blickschutzfilter, der leicht am Bildschirm angebracht und von diesem entfernt werden kann, von Vorteil.

Magnetische Blickschutzfilter können mittels magnetischer Wechselwirkung an einem elektronischen Gerät angebracht werden, was ein schnelles Anbringen und Entfernen, ohne die genannten Nachteile eines klebbaren Blickschutzfilters, erlaubt. Im Allgemeinen ist zumindest ein magnetischer Körper auf einem magnetischen Blickschutzfilter angebracht oder im Blickschutzfilter integriert. Zum Anbringen des Blickschutzfilters an einem Bildschirm muss das magnetische Element des Blickschutzfilters mit einem in dem Bildschirm eines elektronischen Geräts integrierten magnetischen Körper wechselwirken. Solche magnetischen Blickschutzfilter sind aus den Gebrauchsmusterschriften DE 20 2017 100 546 U1 und CN 205651721 U sowie aus den veröffentlichten Patentanmeldungen US 2016/087670 A1 und WO 2018/166570 A1 bereits bekannt.

Die Gebrauchsmusterschrift CN 205651721 U beansprucht beispielsweise einen magnetischen Blickschutzfilter mit einer magnetischen Haftschicht, wobei der Blickschutzfilter, ein Doppelseitenklebeband und ein magnetisch wirksames Element nacheinander in drei Schichten angeordnet sind. Allerdings führt eine solche Anordnung des magnetisch wirksamen Elements unweigerlich dazu, dass das magnetisch wirksame Element in Kombination mit dem Doppelseitenklebeband von dem Blickschutzfilter hervorsteht. Somit bildet sich bei Anwendung des Blickschutzfilters auf einem Bildschirm ein Abstand zwischen dem Blickschutzfilter und einer Bildschirmoberfläche, wodurch das Bild auch für frontal in den Bildschirm schauenden Betrachter (von dem angenommen wird, dass er dazu autorisiert ist) unklarer wird.

Des Weiteren kann ein solcher Blickschutzfilter nur an elektronischen Geräten angebracht werden, die zumindest einen im Bildschirm (z. B. im Bildschirmgehäuse) integrierten Magneten aufweisen. Daher ist ein solcher Blickschutzfilter für alle elektronischen Geräte ohne integrierte Magnete im Bildschirm und somit für die meisten Laptops und stationären Computerbildschirme, ungeeignet.

Es ist daher Aufgabe der vorliegenden Erfindung, einen Blickschutzfilter zur Befestigung an einem Bildschirm, ein Blickschutzfilterset mit zumindest einem ersten magnetisch wirksamen Element und einem dem ersten magnetisch wirksamen Element zugeordneten zweiten magnetisch wirksamen Element, sowie ein entsprechendes Verfahren zur Herstellung eines Blickschutzfilters und ein Verfahren zur Befestigung eines Blickschutzfilters an einem Bildschirm bereitzustellen, mit denen die zuvor genannten Nachteile vermieden werden und womit elektronische Geräte ohne integrierte Magnete mit einem leicht anbringbaren und abnehmbaren Blickschutzfilter ausgerüstet werden können, der den Blick für den frontal in den Bildschirm schauenden Benutzer möglichst wenig beeinträchtigt.

Diese Aufgabe wird durch einen Blickschutzfilter gemäß Patentanspruch 1, durch ein Blickschutzfilterset gemäß Patentanspruch 10, durch ein Verfahren zur Herstellung eines Blickschutzfilters gemäß Patentanspruch 13, durch ein Verfahren zur Befestigung eines Blickschutzfilters gemäß Patentanspruch 14 sowie durch ein elektronisches Gerät mit einem Blickschutzfilter gemäß Anspruch 15 gelöst.

Ein erfindungsgemäßer Blickschutzfilter zur Befestigung an einem elektronischen Bildschirm bzw. an dessen Oberfläche umfasst ein flächiges Blickschutzfilterelement mit einer in Richtung Bildschirm weisenden Anlageseite und einer zu einem Benutzer weisenden Ansichtsseite und zumindest einer Aussparung. Der Aussparung des Blickschutzfilters ist zumindest ein erstes magnetisch wirksames Element zugeordnet. Des Weiteren ist die Aussparung ausgebildet, um an der Anlageseite ein zweites magnetisch wirksames Element zur lösbaren Befestigung des Blickschutzfilters am Bildschirm zumindest teilweise in sich aufzunehmen (bei einer Anordnung des Blickschutzfilters auf einem Bildschirm unter Zusammenwirken mit dem ersten magnetisch wirksamen Element).

Unter einem Bildschirm wird im Rahmen der Erfindung grundsätzlich ein Bildschirmgehäuse mit einem vom Bildschirmgehäuse eingefassten Anzeigenbereich des Bildschirms verstanden. Der Bildschirm kann in einem beliebigen elektronischen Gerät, wie beispielsweise einem Computer und/oder mobilen Endgeräten (z. B. Laptops, Tablets, Mobiltelefonen) integriert sein. Unter einem Bildschirmgehäuse von Mobiltelefonen oder Tablets wird im Rahmen dieser Erfindung eine den Anzeigebereich umgebende Einfassung verstanden bzw. das Bildschirmgehäuse kann mit dem Gehäuse des kompletten Geräts gleichgesetzt werden.

Unter einem flächigen Blickschutzfilterelement wird grundsätzlich eine flache Kunststoffscheibe verstanden, welche über einen Bildschirm gelegt werden kann, um damit einen Blickwinkel auf wenigstens 60° und vorzugsweise auf wenigstens 50° einzuschränken. Vorzugsweise ist die Kunststoffscheibe dreischichtig.

Die bevorzugte mittlere Tiefe (Dicke) des Blickschutzfilters ist minimal 0,84 mm und maximal 0,92 mm, vorzugsweise jedoch 0,9 mm.

Ein Blickschutzfilter umfasst wie erwähnt ein flächiges Blickschutzfilterelement, welches über zumindest eine Vorrichtung verfügt, um das flächige Blickschutzfilterelement auf bzw. an einem Bildschirm zu fixieren. Diese Vorrichtung umfasst wie erwähnt ein erstes magnetisch wirksames Element, welches einer Aussparung des Blickschutzfilterelements zugeordnet ist, und vorzugsweise über oder in der Aussparung des Blickschutzfilterelements angeordnet ist. Dieses erste magnetisch wirksame Element kann wiederum mit einem zweiten magnetisch wirksamen Element wechselwirken, wobei das zweite magnetisch wirksame Element in der Aussparung aufgenommen werden kann.

Unter "magnetisch wirksamen Elementen" wird im Rahmen dieser Erfindung ein magnetisch anziehendes Material verstanden. Das magnetisch wirksame Element kann beispielweise mittels eines Klebemittels und/oder durch Klemmung oder dergleichen auf einer gewünschten Position fixiert werden oder beispielweise in Form eines Lacks (z. B. Ferritlack) aufgetragen werden.

Unter einem "ersten magnetisch wirksamen Element" wird im Rahmen der Erfindung grundsätzlich ein am Blickschutzfilter angeordnetes magnetisch wirksames Element verstanden.

Unter einem "zweiten magnetisch wirksamen Element" wird im Rahmen der Erfindung grundsätzlich ein zur bestimmungsgemäßen Befestigung des Blickschutzfilters an einem Bildschirm, vorzugsweise an einem Bildschirmgehäuse, befestigtes magnetisch wirksames Element verstanden. Bevorzugt weist das "zweite magnetisch wirksame Element" im bestimmungsgemäß montierten Zustand in Richtung einer Anlageseite des Blickschutzfilters.

Der Blickschutzfilter hat eine Anlageseite und eine Ansichtsseite. Bei bestimmungsgemäßer Anordnung des Blickschutzfilters auf einem Bildschirm wird unter der Anlageseite im Rahmen der Erfindung grundsätzlich die dem Bildschirm zugewandte Seite des Blickschutzfilters verstanden. Im Gegensatz dazu wird unter einer Ansichtsseite die dem Benutzer zugewandte Seite verstanden.

In dem Blickschutzfilter kann eine Vielzahl von Aussparungen angeordnet sein, wobei erfindungsgemäß zumindest eine Aussparung vorhanden ist. Vorzugsweise enthält der Blickschutzfilter zwei oder mehr Aussparungen, wobei wie erwähnt zumindest einer Aussparung und vorzugsweise mindestens zwei Aussparungen je ein erstes magnetisch wirksames Element zugeordnet ist.

Vorteilhafterweise kann ein solcher erfindungsgemäßer Blickschutzfilter lösbar an einem Bildschirm fixiert werden. Dabei ist es nicht erforderlich, dass der Bildschirm über integrierte Magnete verfügt, was eine universelle Anwendung des erfindungsgemäßen Blickschutzfilters auf jeglicher Art von Bildschirmen ermöglicht. Zusätzlich kann der Blickschutzfilter in einem gegenüber den bekannten Blickschutzfiltern reduzierten Abstand, vorzugsweise sogar direkt und ohne Abstand bzw. ohne Hohlräume zu bilden, auf der Bildschirmoberfläche anliegen, da das zweite magnetisch wirksame Element in einer Aussparung des Blickschutzfilters aufgenommen werden kann. Ein solcher nah oder sogar direkt an der Bildschirmoberfläche anliegender Blickschutzfilter verhindert eine Reduzierung der Bildqualität bei einer frontalen Sicht auf den Bildschirm.

Ein erfindungsgemäßes Blickschutzfilterset umfasst einen zuvor erläuterten erfindungsgemäßen Blickschutzfilter sowie ein dem ersten magnetisch wirksamen Element des Blickschutzfilters zugeordnetes zweites magnetisch wirksames Element. Dabei kann das zweite magnetisch wirksame Element an einer Seite ein Klebemittel zur Befestigung an einem Bildschirm, insbesondere an einem Bildschirmgehäuse, umfassen.

Unter einem Klebemittel ist jedes geeignete zum Kleben dienende Mittel zu verstehen, mit welchem die Befestigung eines magnetisch wirksamen Elements an einem Trägermaterial erfolgen kann. Bevorzugt kann doppelseitiges Klebeband dafür eingesetzt werden, alternative Befestigungsweisen sind flüssig Leime oder mechanische Klemmmittel.

Für eine benutzerfreundliche Aufrüstung elektronischer Geräte mit einem Blickschutzfilter kann ein Blickschutzfilterset zum Kauf angeboten werden. Dieses Set kann beispielsweise zumindest einen Blickschutzfilter enthalten, sowie eine Vielzahl von zweiten magnetisch wirksamen Elementen, die dem Benutzer beispielsweise auch als Ersatz, also zur "Nachrüstung", dienen können. Ein solcher Blickschutzfilter kann sogar individuell an verschiedene Bildschirmgrößen angepasst werden. Hierfür kann das käuflich erwerbbare Set zusätzlich ein Schneidewerkzeug (z. B. eine Stanze) beinhalten, um die Größe des flächigen Blickschutzelements anzupassen und/oder die Aussparungen, gegebenenfalls sogar die ersten und zweiten magnetisch wirksamen Elemente individuell anzupassen. Das gesamte im Set erhältliche Zubehör kann auch separat (als "Ersatzteile") erworben werden, um dem Benutzer ein "Nachrüsten" eventuell nicht mehr verfügbarer Einzelteile zu erleichtern.

Ein erfindungsgemäßes Verfahren zur Herstellung eines Blickschutzfilters weist zumindest die folgenden Schritte auf:
Zunächst wird ein flächiges Blickschutzfilterelement mit einer Anlageseite und einer Ansichtsseite bereitgestellt. Die Größe des flächigen Blickschutzfilterelements kann gegebenenfalls mit einem Schneidewerkzeug an die Größe des Bildschirms, an welchem der Blickschutzfilter angebracht werden soll, angepasst werden. In diesem Blickschutzfilterelement wird dann zumindest eine Aussparung, vorzugsweise aber zwei oder mehr Aussparungen, angeordnet. Der jeweiligen Aussparung wird ein erstes magnetisch wirksames Element zugeordnet. Die Aussparung ist so ausgebildet, dass ein zweites magnetisch wirksames Element an der Anlageseite zumindest teilweise in der Aussparung aufgenommen werden kann (bei einer Anordnung des Blickschutzfilters auf einem Bildschirm unter Zusammenwirken mit dem ersten magnetisch wirksamen Element). Vorzugsweise kann zumindest ein solches (zur Aussparung passendes) zweites magnetisch wirksames Element bereitgestellt werden, wobei bevorzugt auf einer Seite des zweiten magnetisch wirksamen Elements ein Klebemittel angeordnet wird. Somit kann der Blickschutzfilter lösbar an einem Bildschirm angebracht werden.

Ein erfindungsgemäßes Verfahren zur (leichten) Befestigung eines Blickschutzfilters weist zumindest die folgenden Schritte auf:
Zunächst wird zumindest ein zweites magnetisch wirksames Element an einem Bildschirm angeordnet, wobei die Anordnung bzw. Befestigung an dem Bildschirm vorzugsweise mittels eines dem zweiten magnetisch wirksamen Element zugeordneten Klebemittels erfolgt. Das zweite magnetisch wirksame Element wird vorzugsweise so befestigt, dass es mit einem zugeordneten ersten magnetisch wirksamen Element zusammenwirken kann, um einen Blickschutzfilter lösbar an einem Bildschirm zu befestigen, wobei vorzugsweise passgenau der Anzeigenbereich des Bildschirms verdeckt wird. Es folgt ein Zusammenbringen des zweiten magnetisch wirksamen Elements mit einem ersten magnetisch wirksamen Element des Blickschutzfilters, wobei das zweite magnetisch wirksame Element zumindest teilweise in einer dem ersten magnetisch wirksamen Element zugeordneten Aussparung des Blickschutzfilters aufgenommen wird.

Ein erfindungsgemäßes elektronisches Gerät mit einem Blickschutzfilter, insbesondere einem erfindungsgemäßen Blickschutzfilterset, umfasst zumindest ein an einem Bildschirm des elektronischen Geräts angeordnetes und davon vorstehendes zweites magnetisch wirksames Element, wobei das zweite magnetisch wirksame Element mit einem ersten magnetisch wirksamen Element des Blickschutzfilters zusammenwirken kann. Dieses zweite magnetisch wirksame Element ist zumindest teilweise in einer dem ersten magnetisch wirksamen Element zugeordneten Aussparung des Blickschutzfilters aufgenommen, wodurch der Blickschutzfilter an dem Bildschirm befestigt ist.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen und Ausführungsbeispielen einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Wie eingangs aufgeführt, ist in dem Blickschutzfilter zumindest eine Aussparung angeordnet. Vorzugsweise können zwei oder mehr Aussparungen auf dem Blickschutzfilter angeordnet sein, wobei die Aussparungen vorzugsweise in einem Randbereich des flächigen Blickschutzfilterelements angeordnet sind, so dass sie (in Kombination mit zumindest einem ersten magnetisch wirksamen Element) im bestimmungsgemäß montierten Zustand des Blickschutzfilters den Anzeigebereich des Bildschirms nicht blockieren bzw. verdecken.

Unter dem Randbereich des Blickschutzfilterelements wird im Rahmen der Erfindung grundsätzlich der auf der Anlage- und/oder Ansichtsseite gelegene äußere Bereich bzw. Randstreifen verstanden, der sich kontinuierlich umlaufend (innerhalb) entlang eines äußeren Rands des Blickschutzfilterelements erstreckt. Die Breite (bzw. "Höhe" falls es sich um einen oberen oder unteren Randbereich handelt) des Randbereichs des Blickschutzfilterelements beträgt bevorzugt wenigstens 9 mm bis 12 mm, besonders bevorzugt wenigstens 10 mm.

Vorzugsweise kann - wie später noch erläutert gegebenenfalls in Abhängigkeit von der konkreten Ausgestaltung aller Elemente - eine Tiefe einer jeweiligen Aussparung wenigstens 0,8 mm, vorzugsweise wenigstens 0,84 mm, oder wenigstens 0,9 mm betragen.

Unter "Tiefe" der Aussparung wird hierbei die Ausdehnung bzw. Erstreckung der Aussparung verstanden, die von der Anlageseite des Blickschutzfilters aus in das Blickschutzfilterelement hinein bis zu einer Anschlagfläche oder -wand für das zweite magnetisch wirksame Element verläuft, also z. B. bis zu einer Oberfläche des der Aussparung zugeordneten, ersten magnetisch wirksamen Elements, welche die Aussparung an der Ansichtsseite überdeckt.

Die Form der Aussparung ist vorzugsweise so ausgebildet, dass ein zweites magnetisch wirksames Element möglichst passgenau in der Aussparung aufgenommen werden kann.

Die Aussparung kann vorzugsweise das flächige Blickschutzfilterelement vollständig von der Anlageseite zur Ansichtsseite durchdringen, das heißt, die Aussparung stellt einen Durchbruch dar.

Das erste magnetisch wirksame Element ist, insbesondere wenn die Aussparung einen Durchbruch darstellt, vorzugsweise mittels eines Klebemittels auf der Ansichtsseite des Blickschutzfilters angeordnet.

Das erste magnetisch wirksame Element kann zumindest die Aussparung vollständig bedecken oder/und auf der Ansichtsseite zumindest teilweise seitlich über den Rand der Aussparung hinausragen.

Die Form der zumindest einen Aussparung kann beliebig gestaltet sein, vorzugsweise haben die Aussparungen aber eine zylindrische, würfelförmige oder quaderförmige Form. Vorzugsweise ist die Form der Aussparung komplementär zu der Form des zweiten magnetisch wirksamen Elements, so dass das zweite magnetisch wirksame Element passgenau in der Aussparung aufgenommen werden kann. Dies erlaubt ein exakt ausgerichtetes Anbringen und schnelles Entfernen eines Blickschutzfilters an einem Bildschirm, vorausgesetzt zumindest ein zur Aussparung komplementäres zweites magnetisch wirksames Element wurde zuvor passend ausgerichtet auf dem Bildschirm angebracht.

Die Aussparungen können grundsätzlich beliebig auf dem Blickschutzfilterelement positioniert sein, bevorzugt jedoch sind die Aussparungen wie erwähnt im Randbereich des Blickschutzfilterelements angeordnet.

Die Aussparungen können symmetrisch, gespiegelt oder zufällig angeordnet sein.

Eine Aussparung kann unmittelbar an einen Rand des Blickschutzfilterelements angrenzen. In einer bevorzugten Ausführungsform grenzt die Aussparung jedoch nicht unmittelbar an den Rand des Blickschutzfilterelements an, sondern ist ringsum vom Material des Blickschutzfilterelements umgeben. Dies kann die Stabilität des Blickschutzfilters erhöhen.

Alternativ oder zusätzlich zu einem Durchbruch kann zumindest eine Aussparung auch durch eine Kavität, also durch einen einseitig geschlossenen Hohlraum, angelegt sein. Hierbei ist die Kavität dann auf der Anlageseite angeordnet, um von der Anlageseite her das zweite magnetisch wirksame Element aufnehmen zu können.

In einer bevorzugten Ausführungsform ist dann das erste magnetisch wirksame Element in der Kavität angeordnet.

In einer weiteren Variante umfasst der Blickschutzfilter zumindest eine Aussparung in Form eines Durchbruchs, wobei dieser Aussparung kein erstes magnetisch wirksames Element zugeordnet ist. Somit ist die Funktionalität einer im Bildschirm integrierten Kamera oder eines anderen Sensors nicht eingeschränkt, vorausgesetzt der Blickschutzfilter weist in einem Bereich über einer in einem Bildschirm integrierten Kamera, eines anderen Sensors oder eines Bedienelements (z. B. ein Startknopf eines Bildschirms) einen Durchbruch auf. Vorzugsweise kann diese Aussparung vom Benutzer individuell, beispielsweise mit einem Schneidewerkzeug, angelegt werden.

Das erste magnetisch wirksame Element und/oder ein damit zusammenwirkendes zweites magnetisch wirksames Element können vorzugsweise aus einem der folgenden magnetischen Werkstoffen bestehen: weichmagnetische Werkstoffe, Ferromagnete wie Dauermagneten (hartmagnetisch), sowie ferromagnetische Metalle in fester oder flüssiger Form.

Die konkrete Wahl des Materials eines magnetisch wirksamen Elements kann davon abhängen, woraus das jeweils andere magnetisch wirksame Element besteht, mit dem das magnetisch wirksame Element zusammenwirken bzw. gekoppelt werden sollen.

So reicht es beispielsweise aus, dass entweder das erste magnetisch wirksame Element oder das zweite magnetisch wirksame Element selbst magnetisch ist. Das jeweils andere Element braucht dann lediglich magnetisch anziehbar zu sein.

Für eine Realisierung des ersten magnetisch wirksamen Elements, welches der Aussparung zugeordnet ist, gibt es - je nach Material - verschiedene Möglichkeiten:
Beispielsweise kann es als eine Art Folie bzw. dünner Magnetstreifen ausgestaltet sein, welche(r) von der Ansichtsseite aus über die Aussparung, mittels eines geeigneten Klebers, insbesondere eines Klebebands, geklebt ist. Handelt es sich bei der Aussparung um einen Durchbruch, so kann dieser durch die Folie bzw. den Magnetstreifen zur Ansichtsseite hin abgeschlossen werden.

Um ein möglichst dünnes erstes magnetisch wirksames Element zu erhalten, kann dieses auch mithilfe eines Ferritlacks realisiert sein, welcher zum Beispiel auf eine Folie aufgedruckt ist. Dies bietet sich an, wenn das zweite magnetisch wirksame Element ein Magnetmaterial enthält, welches den Ferritlack anzieht.

Wenn es sich bei der Aussparung um eine Kavität handelt, kann das erste magnetisch wirksame Element auch in der Kavität, insbesondere am Boden der Kavität angeordnet sein. In einer bevorzugten Variante dieser Ausführungsform, ist das erste magnetisch wirksame Element mittels eines Ferritlacks realisiert, welcher den Boden der Kavität bedeckt.

Ebenso gibt es für die Realisierung des zweiten magnetisch wirksame Elements, welches auf einem Bildschirm angebracht werden und bei der Montage in der Aussparung aufgenommen werden soll, verschiedene Möglichkeiten:
Da das zweite magnetische Element nachträglich an einem Bildschirm befestigt werden kann, um einen Blickschutzfilter nachzurüsten, überragt in der Regel das zweite magnetisch wirksame Element den Bildschirm, wenn es auf dem Bildschirm angeordnet ist.

Je nach Ausgestaltung kann das zweite magnetisch wirksame Element als etwas dickerer Magnetstreifen oder auch wieder als Folie ausgebildet sein. Über einen Klebefilm auf der Rückseite oder ein Doppelklebeband kann es wie erwähnt am Bildschirm befestigt werden.

Sofern das zweite magnetisch wirksame Element besonders dünn sein soll, könnte auch hier gegebenenfalls ein Ferritlack, beispielsweise auf einer Folie oder dergleichen, verwendet werden, insbesondere wenn das erste magnetisch wirksame Element durch ein magnetisches Material gebildet wird, welches den Ferritlack anzieht.

Die Abmessungen von Länge, Breite und Höhe der ersten und zweiten magnetisch wirksamen Elemente sind grundsätzlich variabel. So können beispielsweise zwei zweite magnetisch wirksame Elemente (10 mm x 5 mm x 1 mm) beispielsweise mit zwei ersten magnetisch wirksamen Elementen wechselwirken, die jeweils zwei Aussparungen zugeordnet sind. Das zumindest eine erste magnetisch wirksame Element kann aber auch in Form eines Magnetstreifens in der dem ersten magnetisch wirksamen Elements zugeordneten Aussparung des Blickschirmfilters realisiert sein und mit zumindest einem zugeordneten zweiten magnetisch wirksamen Element wechselwirken. Ebenso kann das zumindest eine zweite magnetisch wirksame Element in Form eines Magnetstreifens realisiert sein.

Vorzugsweise ist das zweite magnetisch wirksame Element so bemessen, dass es nahezu vollständig oder tatsächlich vollständig in der Aussparung des Blickschutzfilters versenkt werden kann.

Besonders bevorzugt ist die Aussparung im Blickschutzfilter des Blickschutzfiltersets so ausgebildet bzw. das zweite magnetisch wirksame Element und die Aussparung sind so aneinander angepasst, dass das zweite magnetisch wirksame Element nahezu vollständig in der Aussparung aufgenommen werden kann. Die Tiefe der Aussparung ist vorzugsweise so ausgebildet, dass ein zweites magnetisch wirksames Element vorzugsweise vollständig auf einem ersten magnetisch wirksamen Element anliegen kann. Die optimale Tiefe der Aussparung kann abhängig von der Folienstärke des Blickschutzfilters und der Tiefe des zweiten magnetisch Wirksamen Elements sein.

Bevorzugt weist ein zweites magnetisch wirksames Element eine Tiefe (bzw. Dicke) von ca. 1 mm auf. Bei der oben genannten bevorzugten Aussparung mit einer Tiefe von wenigstens 0,8 mm, vorzugsweise wenigstens 0,84 mm, oder wenigstens 0,9 mm und einem zweiten magnetisch wirksamen Element mit einer Tiefe von ca. 1 mm, bleibt bei bestimmungsgemäßer Anwendung des Blickschutzfilters auf einer Bildschirmoberfläche ein kleiner Luftspalt von ca. 0,1 mm bis 0,2 mm zwischen Anlageseite des flächigen Blickschutzfilterelements und Bildschirmoberfläche. Vorteilhafterweise kann durch diesen Luftspalt sichergestellt werden, dass das zweite magnetisch wirksame Element und das erste magnetisch wirksame Element sicher aufeinander aufliegen können. Somit wird beispielsweise ein Verrutschen des Blickschutzfilters verhindert. Je nach Qualität und Stärke der verwendeten ersten und zweiten magnetisch wirksamen Elemente kann die Breite dieses Luftspalts minimiert werden.

Wie bereits erwähnt können der beschriebene Blickschutzfilter und das Blickschutzfilterset schnell und lösbar auf einem Bildschirm angebracht und wieder entfernt werden. Hierfür muss der Bildschirm nicht über integrierte Magnete verfügen, was den Blickschutzfilter für alle Arten von Bildschirmen nutzbar macht. Von großem Vorteil ist auch das direkte Anliegen des Blickschutzfilters auf der Bildschirmoberfläche.

Weiterhin vorteilhaft kann der Blickschutzfilter aber auch "verkehrt herum" an den Bildschirm gekoppelt werden, z. B. wenn eine Beschränkung des seitlichen Sichtfelds aktuell nicht gewünscht ist. Dazu kann der Blickschutzfilter so am Bildschirm angeordnet werden, dass das flächige Blickschutzfilterelement nach oben über den Anzeigebereich hinausragt, d. h. der Anzeigebereich wird nicht mehr vom Blickschutzfilter verdeckt ("nichtbestimmungsgemäßer Zustand des Blickschutzfilters"). Damit kann der Blickschutzfilter sicher verwahrt werden, wobei ein Arbeitsbereich des Nutzers freigehalten wird.

Gemäß einer weiteren bevorzugten Ausführungsform kann zumindest ein erstes magnetisch wirksames Element mittels eines "Metallclips" z. B. nach der Art einer metalllernen Klemme realisiert sein. Vorzugsweise kann der Metallclip einteilig mittels eines ferromagnetischen Metalls ausgebildet sein, z. B. einem dünnen, biegbaren Metallblech. Bevorzugt kann der Metallclip zwei flächige Elemente umfassen, welche mittels eines "Verbindungsscharniers" fest miteinander verbunden sind. Die beiden flächigen Elemente können weitestgehend planparallel zueinander angeordnet werden, z. B. indem die beiden Elemente händisch zusammengepresst werden, wobei ein Abstand zwischen den beiden Elementen bestimmbar ist. Vorzugsweise können die äußeren Abmessungen der beiden flächigen Elemente im Wesentlichen gleich sein.

Der Metallclip ist bevorzugt so ausgebildet, dass eine gewünschte Ausgestaltung des Metallclips, insbesondere eine Distanz zwischen den beiden Elementen, mittels einer Eigenspannung des Metallclips auch bei einer bestimmungsgemäßen Verwendung des Metallclips, also wenn der Metallclip an dem Blickschutzfilter angeordnet ist, beibehalten wird. Vorzugsweise kann der Metallclip, zumindest bei bestimmungsgemäßer Verwendung, einen überwiegend "U-förmigen" Querschnitt aufweisen.

Vorzugsweise kann der Metallclip im Bereich zumindest einer zugeordneten Aussparung so auf den Blickschutzfilter aufgesteckt werden, dass das erste flächige Element der Anlageseite des Blickschutzfilters direkt aufliegt, wobei das zweite flächige Element der Ansichtsseite unmittelbar aufliegt. Das Verbindungsscharnier kann dann einem Rand des Blickschutzfilters aufliegen, also einem die Anlage- und die Ansichtsseite verbindenden Bereich des Blickschutzfilters. Vorzugsweise kann der Metallclip mittels des Verbindungsscharniers und/oder auf Grund der Eigenspannung im Material in einer bestimmten Position am Blickschutzfilter gehalten werden.

Das zweite flächige Element des Metallclips ist vorzugsweise so ausgebildet, dass es im bestimmungsgemäßen Zustand des Metallclips der Ansichtsseite des Blickschutzfilters aufliegt, um zumindest eine zugeordnete Aussparung vollständig zu bedecken. Das zweite flächige Element kann auch ausgestaltet sein, um auf der Ansichtsseite zumindest teilweise seitlich über den Rand der Aussparung hinauszuragen.

Das erste Element des Metallclips umfasst vorzugsweise zumindest eine (durchgehende) Aussparung, welche zumindest eine Größe und Ausgestaltung einer (jeweils) zugeordneten Aussparung des Blickschutzfilters hat. Vorzugsweise kann der Metallclip so am Blickschutzfilter fixiert werden, dass eine Aussparung des ersten flächigen Elements im Wesentlichen "in einer Flucht" mit einer zugeordneten, dazu komplementären, Aussparung des Blickschutzfilters angeordnet ist. Das bedeutet, die Aussparung des Blickschutzfilters ist auch dann vollumfänglich von der Anlageseite aus zugänglich, wenn der Metallclip bestimmungsgemäß am Blickschutzfilter angeordnet ist. Vorzugsweise kann das erste Element des Metallclips dann eine Aussparung des Blickschutzfilters von außen umrahmen, jedoch nicht verdecken.

Um den Blickschutzfilter an einem Bildschirm zu fixieren kann das zweite flächige Element des Metallclips, welches der Ansichtsseite aufliegt, mit einem zugeordneten zweiten magnetisch wirksamen Element am Bildschirmgehäuse magnetisch zusammenwirken. Bei dieser Ausführungsform ist das zweite magnetisch wirksame Element vorzugsweise mittels eines Magneten realisiert.

Der Metallclip kann auch in Form einer "Metall-Schiene" realisiert werden, welche verzugsweise im Wesentlichen genauso breit ist wie der Blickschutzfilter und zumindest eine, aber bevorzugt mehrere Aussparungen aufweist, um zumindest ein zweites magnetisch wirksames Element zumindest teilweise in sich aufzunehmen.

Vorzugsweise kann ein äußerer Rand des Blickschutzfilters in einem Bereich, in dem das Verbindungsscharnier auf dem Rand aufliegt ("Auflagebereich"), gegenüber dem restlichen Rand abgesenkt sein bzw. "versenkt" ausgebildet sein. Vorzugsweise kann ein Auflagebereich soweit abgesenkt sein, dass das Verbindungsscharnier (im bestimmungsgemäßen Zustand des Metallclips) bündig mit einem äußeren Rand des Blickschutzfilters abschließt, und nicht über den Rand hinausragt.

Um den Blickschutzfilter möglichst in unmittelbarer Nähe zur Bildschirmoberfläche zu befestigen, kann ein eine Aussparung umgebender Bereich des Blickschutzfilters, welcher Bereich z. B. im bestimmungsgemäßen Zustand des Metallclips von dem ersten Element des Metallclips bedeckt ist, eine Vertiefung aufweisen. Vorzugsweise kann diese Einsenkung in der Oberfläche der Anlageseite so ausgestaltet sein, dass das erste flächige Element zumindest teilweise, vorzugsweise aber vollständig, in dem flächigen Blickschutzfilterelement versenkt werden kann. Beispielsweise kann eine Tiefe der Einsenkung einer Materialstärke des ersten Elements des Metallclips entsprechen.

Vorteilhafterweise kann gemäß dieser Ausführungsform ein erstes magnetisch wirksames Element reversibel am Blickschutzfilter angeordnet werden, wobei auf die Verwendung eines zusätzlichen Klebemittels verzichtet werden kann. Weiterhin ermöglicht ein derartiger Blickschutzfilter mit einer Anzahl von Metallclips aber auch, dass die beiden Seiten des Blickschutzfilters zwischen zwei Anwendungen getauscht werden können, sofern die zumindest eine Aussparung des Blickschutzfilters durchgehend ausgebildet ist. Je nach Anordnung des Metallclips, also je nachdem, auf welcher Seite des Blickschutzfilters das erste bzw. zweite flächige Element des Metallclips tatsächlich angeordnet wird, kann eine Seite des Blickschutzfilters (im Rahmen dieser Anordnung) entweder zur Anlageseite oder aber zur Ansichtsseite des Blickschutzfilters bestimmt werden. Gleichzeitig bleiben auch die bereits genannten Vorteile des Blickschutzfilters erhalten.

Gemäß einer weiteren bevorzugten Ausführungsform kann der Blickschutzfilter über zumindest eine weitere nicht-magnetische Vorrichtung verfügen, um den Blickschutzfilter an einem Bildschirm zu fixieren. Diese weitere Vorrichtung kann vorzugsweise in Form einer Fixierlippe realisiert werden.

Die Fixierlippe verfügt bevorzugt über ein flächiges Element (welche beispielsweise eine Oberfläche von 10 mm x 10 mm aufweist) welches durch eine Vorderseite und eine Rückseite charakterisiert ist. Die Rückseite liegt weist zu der Bildschirmoberfläche und teilweise, bei bestimmungsgemäßer Verwendung eines Blickschutzfilters auf einem Bildschirm, zu der Ansichtsseite des Blickschutzfilters und liegt vorzugsweise an dieser an. Die Vorderseite ist dem Bildschirmbenutzer zugewandt. Zwischen der Bildschirmoberfläche und der Fixierlippe kann sich ein kleiner Luftspalt befinden, in welchem der Blickschutzfilters aufgenommen und so zwischen Bildschirmoberfläche und der Fixierlippe gehalten wird. Grundsätzlich könnte die Fixierlippe ohne montierten Blickschutzfilter auch an der Bildschirmoberfläche anliegen um eine leichte Klemmung des Blickschutzfilters zu erreichen, wenn er zwischen Bildschirmoberfläche und der Fixierlippe eingesteckt wird.

Die bevorzugte mittlere Breite der Fixierlippe ist minimal 10 mm und/oder maximal 20 mm, vorzugsweise jedoch 10 mm. Die bevorzugte mittlere Höhe der Fixierlippe ist minimal 10 mm und/oder maximal 20 mm, vorzugsweise jedoch 20 mm. Die bevorzugte mittlere Tiefe (Dicke) der Fixierlippe ist minimal 0,6 mm und/oder maximal 1,0 mm, vorzugsweise jedoch 0,8 mm.

Die Fixierlippe kann vorteilhafterweise so eingesetzt werden, dass ein unterer Teil der Rückseite der Fixierlippe mit einem Klebemittel (beispielsweise mit einem zweiseitigen Klebeband) an einer Bildschirmoberfläche befestigt werden kann, während ein oberer Teil der Rückseite der Fixierlippe nicht mit einem Klebemittel ausgestattet wird, sodass ein Blickschutzfilter mittels der Fixierlippe an einer Bildschirmoberfläche fixiert werden kann, indem der Blickschutzfilter einfach hinter die Fixierlippe geschoben werden kann.

Vorteilhafterweise vereinfacht die Verwendung einer solchen Fixierlippe das Fixieren eines Blickschutzfilters an einem Bildschirm und verringert die Wahrscheinlichkeit eines Verrutschens des Blickschutzfilters, sodass der Blickschutzfilter stabil in seiner gewünschten Position gehalten wird. Eine solche Fixierlippe kann bei Blickschutzfiltern prinzipiell bei allen Blickschutzfilterformaten verwendet werden, vorzugsweise wird eine Fixierlippe aber bei Blickschutzfiltern mit einer Oberfläche von zumindest 50.000 mm² oder größeren Blickschutzfiltern verwendet.

Vorzugsweise ist die Fixierlippe aus Plastik hergestellt, besonders bevorzugt wird die Fixierlippe aus einem hochtransparenten Material (z.B. Polyethylenterephthalat (PET) oder Polypropylen (PP)) hergestellt. Somit erlaubt diese Plastikfixierlippe eine uneingeschränkte Ansicht auf den Bildschirminhalt, auch wenn sie sich zumindest teilweise über dem Anzeigebereich des Bildschirms befindet,

Zusätzlich erleichtert die Nutzung von zumindest einer Fixierlippe das Ausrichten und Anbringen des Blickschutzfilters auf dem Bildschirmgehäuse, indem das erste magnetisch wirksame Element leicht auf dem zweiten magnetisch wirksamen Element ausgerichtet werden kann. Hierfür wird zunächst ein unterer Teil der Rückseite einer Fixierlippe mittels eines zugeordneten Klebemittels auf dem Bildschirm angeordnet. Bevorzugt erfolgt diese Anordnung mittig am unteren Rand des Bildschirmgehäuses, welcher zur Anzeigefläche des Bildschirms hin ausgerichtet ist. Die Fixierlippe kann so angeordnet sein, dass ein oberer Teil der Rückseite der Fixierlippe, welchem kein Klebemittel zugeordnet ist und welcher bevorzugt eine Höhe von zumindest 5 mm aufweist, das Bildschirmgehäuse überragt und zumindest teilweise über dem Anzeigebereich des Bildschirms aufliegt. Somit ist durch die Verwendung einer solchen Fixierlippe gewährleistet, dass der Blickschutzfilter bündig mit dem unteren Rand des Anzeigenbereichs des Bildschirms abschließt und der Blickschutzfilter stabil in dieser Position fixiert ist.

Vorteilhafterweise erleichtert die Verwendung einer Fixierlippe auch das Fixieren des zumindest einen zweiten magnetisch wirksamen Elements auf der Bildschirmoberfläche und bevorzugt auf dem Bildschirmgehäuse. Vorzugsweise kann die Befestigung des zumindest einen zweiten magnetisch wirksamen Elements so erfolgen, dass dieses zunächst in einem dem zweiten magnetisch wirksamen Elements zugeordneten Durchbruch des Blickschutzfilters durch Wechselwirkung mit einem ersten magnetisch wirksamen Elements angeordnet wird. Der Blickschutzfilter kann zunächst zwischen der Bildschirmoberfläche und dem oberen Teil der Rückseite der Fixierlippe angeordnet werden. Nun kann der Blickschutzfilter auf der Bildschirmoberfläche angeordnet werden und das zumindest eine zweite magnetisch wirksame Element wird mittels des dem zweiten magnetisch wirksamen Elements zugeordneten Klebemittels am Bildschirmgehäuse fixiert. Somit haftet das zumindest eine zweite magnetisch wirksame Element an der Oberfläche des Bildschirmgehäuses. So ist vorteilhafterweise ist die passgenaue Ausrichtung des zweiten magnetischen Elements in der Aussparung des Blickschutzfilters gewährleistet.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen schematisch:
Figur 1 eine perspektivische Ansicht auf die Anlageseite eines Ausführungsbeispiels eines Blickschutzfilters,
Figur 2 eine perspektivisch vergrößerte Ansicht eines Teil des Blickschutzfilters gemäß Figur 1 im Bereich einer Aussparung,
Figur 3 eine perspektivische Ansicht auf die Ansichtsseite eines Blickschutzfilters gemäß den Figuren 1 und 2,
Figur 4 einen Schnitt durch den Teil des Blickschutzfilters gemäß Figuren 1 bis 3, mit der Aussparung,
Figur 5 einen Schnitt durch den Teil eines Blickschutzfilters mit durchgehender Aussparung gemäß Figuren 1 bis 4, welcher an einem Bildschirm angebracht ist,
Figur 6 eine perspektivische Ansicht auf die Anlageseite eines Ausführungsbeispiels eines Blickschutzfiltersets mit einem Blickschutzfilter gemäß Figuren 1 bis 5,
Figuren 7 bis 9 verschiedene Ausführungsformen des Blickschutzfilters mit unterschiedlichen Ausgestaltungen der Aussparungen im Blickschutzfilterelement ,
Figur 10 eine perspektivische Ansicht eines Laptops mit einem Blickschutzfilterset,
Figur 11 eine perspektivische Ansicht eines Laptops mit einem Blickschutzfilterset mit Fixierlippe zum Fixieren des Blickschutzfilters am Bildschirm,
Figur 12 Schnitt durch einen Teil eines Blickschutzfilters, welcher gemäß Figur 11 mit einer Fixierlippe an einem Bildschirm fixiert ist.
Figur 13 einen Schnitt durch den Teil eines Blickschutzfilters mit einer Kavität,
Figur 14 einen Schnitt durch den Teil eines Blickschutzfilters mit Kavität gemäß Figur 13, welcher an einem Bildschirm angebracht ist,
Figur 15 eine Draufsicht eines Ausführungsbeispiels eines ersten magnetisch wirksamen Elements realisiert als Metallclip,
Figur 16 eine perspektivisch vergrößerte Ansicht eines Teil des Blickschutzfilters gemäß Figur 2 mit einem Metallclip gemäß Figur 15,
Figur 17 Schnitt durch den Teil eines Blickschutzfilters mit Bildschirm, wobei das erste magnetisch wirksame Element durch einen Metallclip gemäß Figuren 15 und 16 realisiert ist,

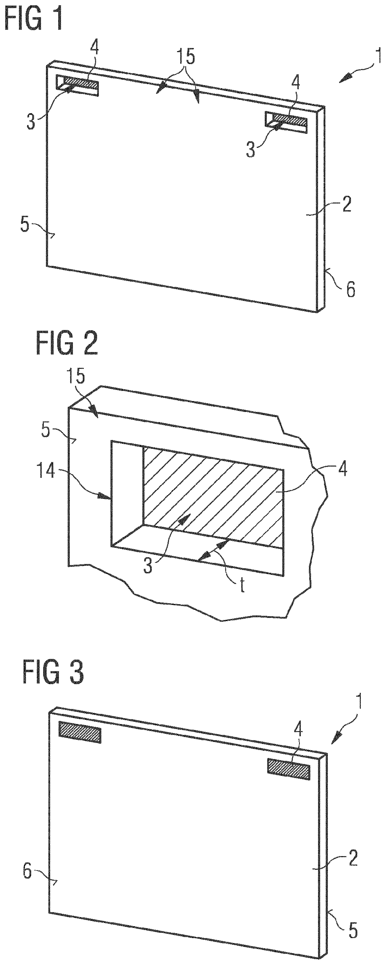

Figur 1 zeigt ein erstes bevorzugtes Ausführungsbeispiel eines erfindungsgemäßen Blickschutzfilters 1 mit einem flächigen Blickschutzfilterelement 2, beispielsweise hier einem Blickschutzfilter-Folienlaminat 2 (mit den eingangs beschriebenen Lamellen), mit einer Anlageseite 5 und einer Ansichtsseite 6, wobei Figur 1 eine Ansicht auf die Anlageseite 5 des Blickschutzfilters 1 darstellt. In diesem Ausführungsbeispiel sind der Blickschutzfilter 1 bzw. das flächige Blickschutzfilterelement 2 rechteckig.

Der Blickschutzfilter 1 verfügt in diesem Ausführungsbeispiel über zwei Aussparungen 3, die in einem Randbereich 15 einer Längsseite des flächigen Blickschutzfilterelements 2 angeordnet sind, hier an der oberen Kante. Je ein erstes magnetisch wirksames Element 4 ist auf der Ansichtsseite 6 des flächigen Blickschutzfilterelements 2 über einer dem jeweiligen ersten magnetisch wirksamen Element 4 zugeordneten Aussparung 3 angeordnet, wobei das erste magnetisch wirksame Element 4 die jeweilig zugeordnete Aussparung 3 vollständig bedeckt.

Figur 2 zeigt eine perspektivisch vergrößerte Ansicht eines Teils des Blickschutzfilters 1 gemäß Figur 1 im Bereich einer Aussparung 3. Die Aussparung 3 ist im Randbereich 15 des Blickschutzfilters 1 angeordnet und vollumfänglich vom flächigen Blickschutzfilterelement 2 umgeben. Es handelt sich bei der Aussparung 3 um einen Durchbruch 3. Die Tiefe t der Aussparung 3 ist die Ausdehnung des auf der Anlageseite 5 des Blickschutzfilters 1 gelegenen Bereichs der Aussparung 3 bis zur Oberfläche des der Aussparung 3 zugeordneten, ersten magnetisch wirksamen Elements 4. Das bedeutet, die Tiefe t entspricht hier im Wesentlichen der vollen Dicke des flächigen Blickschutzfilterelements 2, bzw. die Tiefe t reicht durch den kompletten Durchbruch 3 hindurch.

Figur 3 ist eine perspektivische Ansicht auf die Ansichtsseite 6 des Blickschutzfilters 1 gemäß den Figuren 1 und 2. Hier ist zu sehen, dass das erste magnetisch wirksame Element 4 jeweils den zugeordneten Durchbruch 3 vollständig bedeckt.

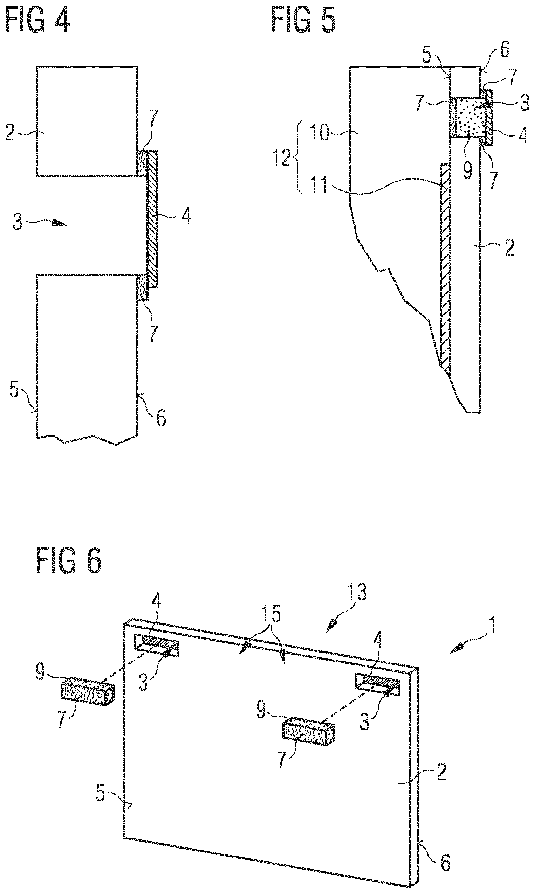

Aus dem in Figur 4 zu sehenden Schnitt durch einen Teil des Blickschutzfilters 1 gemäß Figuren 1 bis 3 ist erkennbar, dass das erste magnetisch wirksame Element 4 an der Ansichtsseite 6 entlang des Randes des Durchbruchs 3 mit einem Klebemittel 7 bzw. einer Klebstoffschicht 7 an dem flächigen Blickschutzfilterelement 2 befestigt ist. Hieraus ist auch erkennbar, dass das erste magnetisch wirksame Element 4 relativ dünn ist. Vorzugsweise handelt es sich hierbei um eine Metall- oder um eine Plastikfolie welche auf der zum Durchbruch 3 weisenden Seite im mittleren Bereich, also im Bereich des Durchbruchs 3, mit einem Ferritlack versehen ist und im äußeren Bereich mit der Klebstoffschicht 7.

Figur 5 zeigt im Wesentlichen denselben Schnitt durch den Teil des Blickschutzfilters 1 mit der Aussparung 3 wie in Figur 4, wobei hier jedoch der Blickschutzfilter 1 an einem Bildschirm 12 angebracht ist.

Der Blickschutzfilter 1 ist durch die magnetische Anziehungskraft zwischen dem ersten magnetisch wirksamen Element 4 und einem zweiten magnetisch wirksamen Element 9 passgenau auf der Oberfläche des Bildschirms 12 fixiert, es kann aber auch ein Luftspalt (ca. 0,2 mm zwischen Bildschirmoberfläche und Anlageseite des Blickschutzfilters entstehen (nicht gezeigt). Das erste magnetisch wirksame Element 4 ist wie erwähnt durch das Klebemittel 7 über der durchgehenden Aussparung 3 an dem Blickschutzfilter 1 fixiert. Das zweite magnetisch wirksame Element 9 ist auf dem Bildschirmgehäuse 10 eines Bildschirms 12 durch ein Klebemittel 7 fixiert. Bei dem zweiten magnetisch wirksamen Element 9 handelt es sich beispielsweise um einen kleinen Neodym-Magnetstreifen.

Das zweite magnetisch wirksame Element 9 ist so ausgebildet, dass es, mit dem am zweiten magnetisch wirksamen Element 9 angebrachten Klebemittel 7, bis auf vorzugsweise 0,2 mm in der Aussparung 3 des Blickschutzfilters 1 aufgenommen werden kann. Somit liegt in dieser Ausführungsform das flächige Blickschutzfilterelement 2 bis auf ca. 0,2 mm auf einem Anzeigenbereich 11 des Bildschirms 12 auf.

Hierzu ist die Dicke des zweiten magnetisch wirksamen Elements 9, also hier des Neodym-Magnetstreifens 9, an die Dicke des flächigen Blickschutzfilterelements 2, hier also des Blickschutzfilter-Folienlaminats 2, angepasst. Die Dicken der Klebeschichten 7 am zweiten magnetisch wirksamen Element 9 und am ersten magnetisch wirksamen Element 9 heben sich auf.

Die Dicke des zweiten magnetisch wirksamen Elements 9 beträgt bevorzugt mindestens 0,8 mm und/oder bevorzugt maximal 1,0 mm.

Figur 6 ist eine perspektivische Ansicht auf die Anlageseite 5 eines Ausführungsbeispiels eines Blickschutzfiltersets 13, umfassend einen Blickschutzfilter 1 gemäß Figuren 1 bis 5. Das Blickschutzfilterset 13 beinhaltet den Blickschutzfilter 1 gemäß Figuren 1 bis 5 und zwei zweite magnetisch wirksame Elemente 9. Auf einer (dem Bildschirm zugewandten) Seite des zweiten magnetischen Elements ist bereits ein Klebemittel 7 in Form von doppelseitigem Klebeband angebracht. Jede Aussparung 3 ist in einer Weise realisiert, dass das erste magnetisch wirksame Element 4 mit dem zweiten magnetisch wirksamen Element 9 wechselwirken kann, d. h. eine magnetische Anziehungskraft zwischen dem ersten magnetisch wirksamen Element und dem zweiten magnetisch wirksamen Element aufgebaut werden kann. Hierbei kann das zweite magnetisch wirksame Element 9 vollständig in der dem jeweiligen zweiten magnetisch wirksamen Element 9 zugeordneten Aussparung 3 aufgenommen werden, so dass das zweite magnetisch wirksame Element 9 in der Aussparung 3 im Wesentlichen versenkt wird.

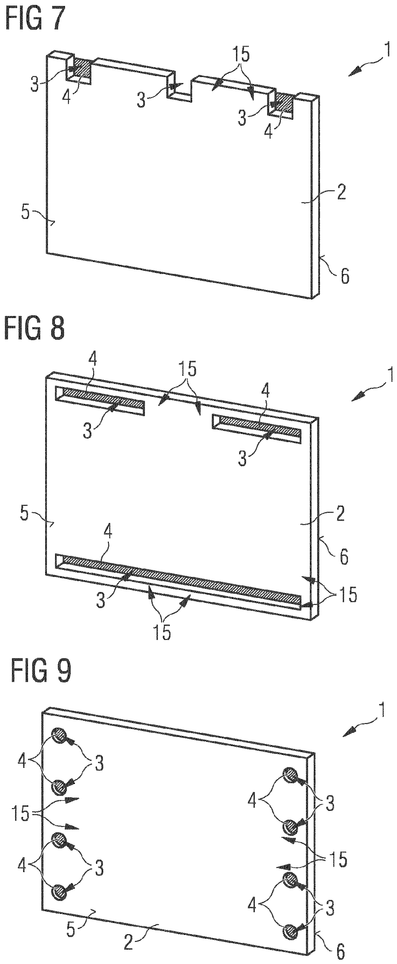

Die Figuren 7 bis 9 zeigen verschiedene mögliche Ausgestaltungen von Aussparungen 3 in einem Blickschutzfilterelement 2 gemäß mehreren Ausführungsformen des Blickschutzfilters 1, wobei es sich bei den Aussparungen 3 hier jeweils um Durchbrüche 3 handelt, die von einer Seite zur anderen Seite, d. h. von der Anlageseite 5 bis zur Ansichtsseite 6, des flächigen Blickschutzfilterelements 2 durchgehen.

In Figur 7 sind die Aussparungen 3 im Randbereich 15 einer Längsseite des Blickschutzfilters 1 angebracht, wobei die Aussparungen 3 unmittelbar an den Rand bzw. die Begrenzung des Blickschutzfilterelements 2 angrenzen. Folglich sind die Aussparungen nur an drei Seiten von dem flächigen Blickschutzfilterelement 2 umgeben. Die Aussparungen 3 sind quadratisch. Den beiden im Eckbereich des Blickschutzfilters 1 positionierten Aussparungen 3 ist je ein erstes magnetisch wirksames Element 4 zugeordnet, welches auf der Ansichtsseite 6 angeordnet ist. Der mittigen durchgehenden Aussparung 3 ist kein magnetisch wirksames Element 4 zugeordnet, wodurch beispielsweise eine komplementär zur Aussparung 3 angeordnete in einem Bildschirm integrierte Kamera nicht von dem Blickschutzfilter 1 überdeckt werden würde.

Figur 8 zeigt eine weitere Ausführungsform eines Blickschutzfilters 1. Die Aussparungen 3 sind vollumfänglich innerhalb des flächigen Blickschutzfilterelements 2 angeordnet. Wie hier gezeigt, sind zwei rechteckige kleinere Aussparungen 3 im Randbereich 15 einer ersten (hier oberen) Längsseite des Blickschutzfilters 1 und eine rechteckige längere Aussparung 3 im Randbereich 15 einer (hier unteren) zweiten Längsseite des flächigen Blickschutzfilterelements 2 angeordnet. Jeder Aussparung 3 ist je ein erstes magnetisch wirksames Element 4 zugeordnet, welches an der Anlageseite 6 angeordnet ist und die zugeordnete Aussparung 3 vollständig bedeckt.

Figur 9 zeigt eine weitere Ausführungsform eines Blickschutzfilters 1, wobei acht Aussparungen 3 im dem Blickschutzfilter 1 angeordnet sind. Je vier Aussparungen 3 sind im Randbereich 15 von je einer Querseite des flächigen Blickschutzfilterelements 2 angeordnet. Die Aussparungen 3 sind durchgehend und weisen eine runde Form auf. Jeder Aussparung 3 ist je ein erstes magnetisch wirksames Element 4 zugeordnet, welches an der Anlageseite 6 angeordnet ist und die zugeordnete Aussparung 3 vollständig bedeckt.

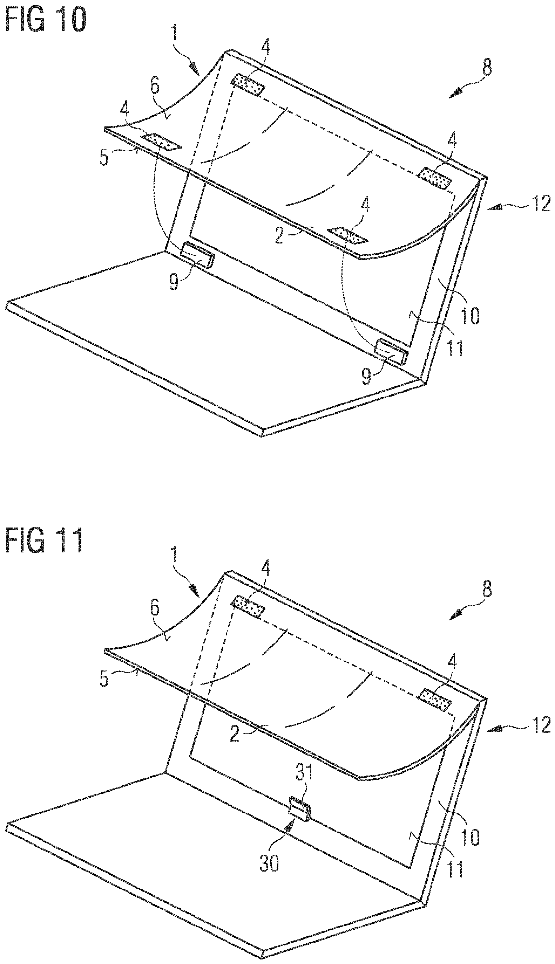

Figur 10 ist eine perspektivische Ansicht eines Laptops 8 mit einem teilweise angebrachten Blickschutzfilterset. In diesem Ausführungsbeispiel verfügt der Blickschutzfilter 1 über vier Aussparungen 3. Die Aussparungen 3 sind symmetrisch in den Eckbereichen des Randbereichs 15 des Blickschutzfilters 1 angeordnet. Dieses Ausführungsbeispiel verfügt über vier den jeweiligen Aussparungen 3 zugeordnete erste magnetisch wirksame Elemente 4, wobei die Aussparungen 3 durchgehend (also Durchbrüche) sind und die ersten magnetisch wirksamen Elemente 4 auf der Ansichtsseite 6 des Blickschirmfilters 1 angeordnet sind. In diesem Ausführungsbeispiel sind vier zweite magnetisch wirksame Elemente 9 auf dem Bildschirmgehäuse 10 angeordnet, wobei die zweiten magnetisch wirksamen Elemente 9 so auf dem Bildschirmgehäuse 10 angeordnet sind, dass sie im Wesentlichen passgenau in die jeweiligen, den zweiten magnetisch wirksamen Elementen 9 zugeordneten Aussparungen 3 des Blickschutzfilters 1 aufgenommen werden können. In dem hier angezeigten Ausführungsbeispiel sind die Grundflächen des Blickschutzfilters 1 und des Laptopbildschirms 12 im Wesentlichen deckungsgleich.

Figur 11 ist eine perspektivische Ansicht eines Laptops 8 mit einer weiteren Ausführungsform eines Blickschutzfiltersets 13 gemäß Figur 10. In dieser Ausführungsform verfügt der Blickschutzfilter 1 über zwei Aussparungen 3, welche symmetrisch im oberen Randbereich 15 des Blickschutzfilters 1 angeordnet sind. Eine Fixierlippe 30 ermöglicht eine zusätzliche Befestigung des Blickschutzfilters 1 am Bildschirm 12.

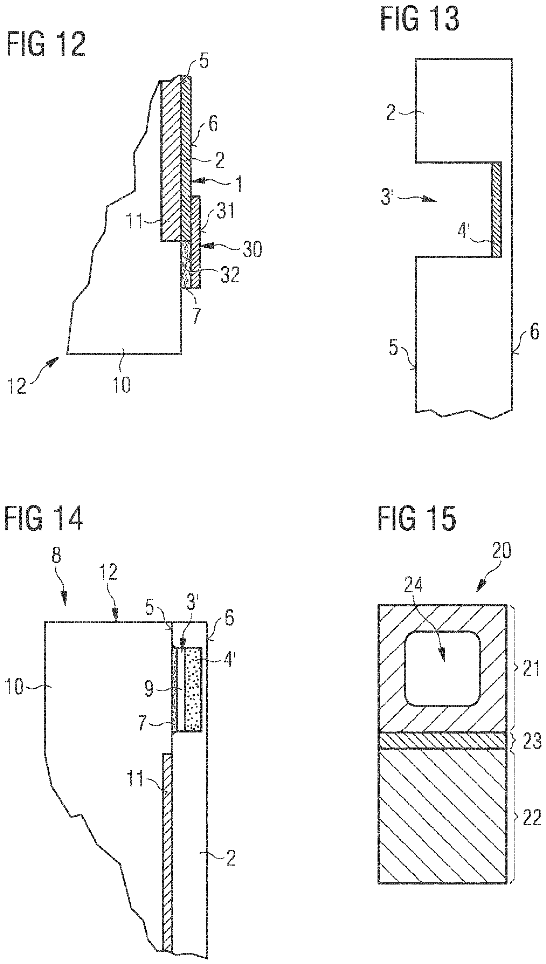

In dieser Ausführungsform ist die Fixierlippe 30 mittig am unteren Rand des Bildschirms 12 angebracht, wobei der untere Teil der Rückseite 32 der Fixierlippe 30 mit einem Klebemittel 7 am Bildschirmgehäuse befestigt ist und der obere Teil der Rückseite der Fixierlippe über dem Anzeigebereich 11 des Bildschirms 11 angeordnet ist (siehe auch Figur 12), In Figur 11 ist die Vorderseite der Fixierlippe 31 abgebildet.

Die Fixierlippe 30 ist vorteilhafterweise elastisch, was ein leichteres Einführen des Blickschutzfilters 1 zwischen der Fixierlippe 30 und dem Bildschirm 12 ermöglicht.

Figur 12 ist ein Schnitt durch einen Teil eines Blickschutzfilters 1, welcher gemäß Figur 11 mit einer Fixierlippe 30 an einem Bildschirm 12 fixiert ist. Die Rückseite 32 der Fixierlippe 30 ist mit einem Klebemittel 7 am den Anzeigebereich 11 des Bildschirms 12 umgebenden Bildschirmgehäuse 10 befestigt. Die Fixierlippe 30 fixiert im bestimmungsgemäßen Zustand den Blickschutzfilter 1 auf dem Bildschirm 12 und bevorzugt auf dem Anzeigenbereich 11 des Bildschirms 12.

Figur 13 ist wieder ein Schnitt durch einen Teil eines Blickschutzfilters 1 im Bereich einer Aussparung 3', welche hier jedoch als Kavität 3' ausgebildet ist, d. h. die Aussparung 3' ist nicht durchgehend sondern erstreckt sich nur von der Anlageseite 5 aus bis zu einer bestimmten Tiefe in das flächige Blickschutzfilterelement 2, beispielsweise wieder ein Blickschutzfilter-Folienlaminat 2, hinein. Das in dieser Ausführungsform erste magnetisch wirksame Element 4' an der Rückwand bzw. am Boden der Kavität 3' ist durch Ferritlack realisiert.

Figur 14 ist ebenfalls ein Schnitt durch diesen Teil des Blickschutzfilters 1 mit der Aussparung 3' in Form einer Kavität 3' gemäß Figur 13, wobei der Blickschutzfilter 1 hier mittels eines zweiten magnetisch wirksamen Elements 9 an einem Bildschirm 12 angeordnet ist.

Das zweite magnetisch wirksame Element 9 ist auch hier mit einem Klebemittel 7 an einem Bildschirmgehäuse 10 angebracht. Das zweite magnetisch wirksame Element 9 kann zusammen mit dem Klebemittel 7 passgenau in der Kavität 3' aufgenommen werden, wodurch der Blickschutzfilter 1 direkt bis auf ca. 0,2 mm auf der Oberfläche des Bildschirms 12 aufliegen kann.

Figur 15 zeigt eine Draufsicht auf ein erstes magnetisch wirksames Element 20 gemäß einer anderen Ausführungsform der Erfindung. Das erste magnetisch wirksame Element 20, hier ein Metallclip 20, welcher beispielsweise in einfachster Form als eines dünnes, biegbares Metallblech ausgebildet ist und ein erstes flächiges Element 21 und ein damit fest verbundenes zweites flächiges Element 22 umfasst. Die beiden Elemente 21, 22 sind mittels eines Verbindungsscharniers 23 als Umbiegestelle verbunden, d. h. die drei Komponenten 21, 22, 23 bilden gemeinsam den Metallclip 20 aus. Der Metallclip 20 ist hier in einem "geöffneten" Zustand gezeigt, wobei die Elemente 21, 22, 23 im Wesentlichen in einer gemeinsamen Ebene liegen. Das erste flächige Element 21 umfasst eine vollständig durch das Element 21 hindurchreichende Aussparung 24.

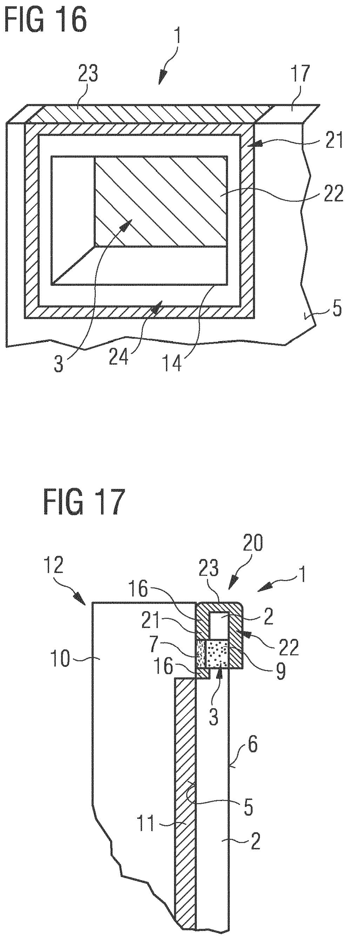

In Figur 16 ist der Metallclip 20 aus Figur 15 im Rahmen einer bestimmungsgemäßen Verwendung auf einem Blickschutzfilter 1 (nur teilweise dargestellt) aufgesteckt. Das erste flächige Element 21 des Metallclips liegt einer Anlageseite 5 des Blickschutzfilters 1 und das zweite flächige Element 22 des Metallclips 20 der Ansichtsseite 6 des Blickschutzfilters 1 auf. Das Verbindungsscharnier 23 liegt einem Rand 17 des Blickschutzfilters 1 auf, wobei der Metallclip 20 mittels des Verbindungsscharniers 23 und einer Eigenspannung des Metallclips 20 in einer gewünschten Position gehalten wird.

Der Metallclip 20 ist so im Bereich einer zugeordneten Aussparung 3 an dem Blickschutzfilter 1 angeordnet, dass die Aussparung 24 des Metallclips 20 im Wesentlichen in einer Flucht mit der Aussparung 3 liegt. Die Aussparung 24 ist derart ausgestaltet und positioniert, dass das erste flächige Element 21 des Metallclips 20 die Aussparung 3 auf der Anlageseite 5 des Blickschutzfilters 1 umrahmt, und nicht verdeckt. Ein Randbereich 14 der Aussparung 3 ist sichtbar, so dass die vollständige Aussparung 3 von der Anlageseite 5 des Blickschutzfilters 1 her zugänglich ist, z. B. um ein zweites magnetisch wirksames Element aufzunehmen.

Figur 17 zeigt einen (Quer-)Schnitt durch Teile des Blickschutzfilters 1 gemäß Figur 16, wobei der Blickschutzfilter 1 hier bestimmungsgemäß an einem Bildschirm 12 angebracht ist. Der Metallclip 20 ist gemäß Figur 16 auf dem flächigen Blickschutzfilterelement 2 angebracht. Das erste flächige Element 21 des Metallclips 20 grenzt einerseits direkt an das Gehäuse 10 des Bildschirms 12 an und liegt andererseits einer Anlageseite 5 des Blickschutzfilters 1 auf. In Figur 17 wird besonders der (verkehrt herum) U-förmige Querschnitt des bestimmungsgemäß montierten Metallclips 20 deutlich.

Die Aussparung 3 ist so ausgebildet, dass sie ein mit einem Klebemittel 7 an einem Bildschirmgehäuse 10 befestigtes zweites magnetisch wirksames Element 9 ganz in sich aufnehmen kann. Das Klebemittel 7 in Kombination mit dem zweiten magnetisch wirksamen Element 9 kann auch nur teilweise von der Aussparung aufgenommen werden, sodass beispielsweise ein ca. 0,2 mm breiter Luftspalt zwischen dem Anzeigebereich 11 des Bildschirms 12 und des Anlageseite 5 des flächigen Blickschutzfilterelements 2 entstehen kann (nicht dargestellt).

Der Blickschutzfilter 1 weist in einem die Aussparung 3 umgebenden Bereich, eine Vertiefung 16 auf der Anlageseite 5 auf. Die Vertiefung ist so ausgestaltet, dass das erste flächige Element 21 des Metallclips 20 zumindest teilweise in der Vertiefung 16 des Blickschutzfilters 1 versenkt werden kann, Das flächige Blickschutzfilterelement 2 weist also in dem die Aussparung umgebenden Bereich eine geringere Stärke bzw. einen geringeren Querschnitt auf, als z. B. in einem dem Anzeigebereich 11 aufliegenden Abschnitt des Blickschutzfilters 1.

Auch der Rand 17 des Blickschutzfilters 1 (siehe Figur 14) kann in einem Bereich, in dem das Verbindungsscharnier 23 dem Rand aufliegt, eine lokal begrenzte Einbuchtung aufweisen. Vorzugsweise ist die Einbuchtung so ausgestaltet, dass das Verbindungsscharnier 23 im bestimmungsgemäßen Zustand des Metallclips 20 bündig mit dem übrigen (nicht abgesenkten) Rand 25 des Blickschutzfilters 1 bzw. mit einem oberen Rand eines Bildschirmgehäuses 10 (siehe Figur 15) abschließt. Weiterhin könnte das flächige Blickschutzfilterelement 2 auch in einem die Aussparung 3 umgebenden Bereich auf der Ansichtsseite 6 eine entsprechende Vertiefung 16 aufweisen, um auch das zweite flächige Element 22 des Metallclips 20 teilweise oder vollständig in der Ansichtsseite 6 zu versenken (nicht gezeigt).

Es wird abschließend noch einmal darauf hingewiesen, dass es sich bei den vorhergehend detailliert beschriebenen Blickschutzfiltern bzw. Blickschutzfiltersets lediglich um Ausführungsbeispiele handelt, welche vom Fachmann in verschiedenster Weise modifiziert werden können, ohne den Schutzbereich der nachfolgenden Ansprüche zu verlassen. So sind beispielsweise die in den jeweiligen Ausführungsbeispielen gezeigten Aussparungen untereinander beliebig austauschbar und/oder kombinierbar. Insbesondere könnten die in den Figuren 7 bis 9 als Durchbrüche gezeigten Aussparungen auch jeweils als Kavitäten ausgebildet sein, die durch das flächige Blickschutzfilterelements nicht komplett hindurchgehen. Grundsätzlich können die Aussparungen beliebige Formen aufweisen. Weiterhin ist es auch möglich, dass einigen Aussparungen des Blickschutzfilters zumindest ein erstes magnetisch wirksames Element fest zugeordnet ist, wobei anderen Aussparungen weils) ein Metallclip zugeordnet ist. Weiterhin schließt die Verwendung der unbestimmten Artikel "ein" bzw. "eine" nicht aus, dass die betreffenden Merkmale auch mehrfach vorhanden sein können.

### Bezugszeichenliste

1 Blickschutzfilter
2 flächiges Blickschutzfilterelement
3 Aussparung / Durchbruch
3' Aussparung / Kavität
4 erstes magnetisch wirksames Element
4' erstes magnetisch wirksames Element / Kavität
5 Anlageseite
6 Ansichtsseite
7 Klebemittel
8 Laptop mit Blickschutzfilterset
9 zweites magnetisch wirksames Element
10 Bildschirmgehäuse
11 Anzeigebereich Bildschirm
12 Bildschirm
13 Blickschutzfilterset
14 Randbereich Aussparung
15 Randbereich Blickschutzfilter
16 Vertiefung im Blickschutzfilter
17 Rand / Blickschutzfilter
20 Metallclip
21 erstes flächiges Element / Metallclip
22 zweites flächiges Element/ Metallclip
23 Verbindungsscharnier
24 Aussparung / Metallclip
30 Fixierlippe
31 Vorderseite / Fixierlippe
32 Rückseite / Fixierlippe
t Tiefe

## Patentansprüche

1. Blickschutzfilter (1) zur Befestigung an einem Bildschirm (12) mit einem flächigen Blickschutzfilterelement (2) mit einer Anlageseite (5) und einer Ansichtsseite (6) und zumindest einer Aussparung (3, 3'), wobei der Aussparung (3, 3') ein am Blickschutzfilter (1) angeordnetes, erstes magnetisch wirksames Element (4, 4', 20) zugeordnet ist und wobei die Aussparung (3, 3') ausgebildet ist, an der Anlageseite (5) ein zweites magnetisch wirksames Element (9) zumindest teilweise in sich aufzunehmen.

2. Blickschutzfilter nach Anspruch 1, wobei die Aussparung (3, 3') eine Tiefe (t) von wenigstens 0,80 mm, vorzugsweise wenigstens 0,84 mm, oder wenigstens 0,90 mm aufweist.

3. Blickschutzfilter nach Anspruch 1 oder 2, wobei die Aussparung (3) das flächige Blickschutzfilterelement (2) vollständig von der Anlageseite (5) bis zur Ansichtsseite (6) durchdringt.

4. Blickschutzfilter nach einem der vorstehenden Ansprüche, wobei das erste magnetisch wirksame Element (4, 20) auf der Ansichtsseite (6) angeordnet ist.

5. Blickschutzfilter nach einem der vorstehenden Ansprüche, wobei das erste magnetisch wirksame Element (4, 20) zumindest die Aussparung (3) vollständig bedeckt.

6. Blickschutzfilter nach einem der vorstehenden Ansprüche, wobei das erste magnetisch wirksame Element (4, 20) zumindest teilweise über einen Randbereich (14) der Aussparung (3) hinausragt.

7. Blickschutzfilter nach Anspruch 1 oder 2, wobei die Aussparung (3') eine Kavität (3') ist und wobei die Kavität (3') auf der Anlageseite (5) angeordnet ist.

8. Blickschutzfilter nach Anspruch 7, wobei das erste magnetisch wirksame Element (4') in der Kavität (3') angeordnet ist.

9. Blickschutzfilter nach einem der vorstehenden Ansprüche, wobei das erste magnetisch wirksame Element (4') mittels eines Ferritlacks, vorzugsweise in der Kavität (3'), realisiert ist.

10. Blickschutzfilterset (13) umfassend einen Blickschutzfilter (1) nach einem der vorstehenden Ansprüche sowie zumindest ein einem ersten magnetisch wirksamen Element (4, 4', 20) des Blickschutzfilters (1) zugeordnetes zweites magnetisch wirksames Element (9), wobei vorzugsweise das zweite magnetisch wirksame Element (9) an einer Seite ein Klebemittel (7) zur Befestigung an einem Bildschirm (12), insbesondere an einem Bildschirmgehäuse (10), umfasst.

11. Blickschutzfilterset nach Anspruch 10, wobei das zweite magnetisch wirksame Element (9) ausgebildet ist, zumindest teilweise in einer Aussparung (3, 3') des Blickschutzfilters (1) aufgenommen zu werden und/oder den Bildschirm (12) zu überragen.

12. Blickschutzfilterset nach Anspruch 11, wobei die Aussparung (3, 3') ausgebildet ist, das zweite magnetisch wirksame Element (9) so in sich aufzunehmen, dass das zweite magnetisch wirksame Element (9) in einer Oberfläche der Anlageseite (5) versenkt wird.

13. Verfahren zur Herstellung eines Blickschutzfilters (1) nach einem der Ansprüche 1 bis 9 mit zumindest den folgenden Schritten:
- Bereitstellen eines flächigen Blickschutzfilterelements (2) mit einer Anlageseite (5) und einer Ansichtsseite (6),
- Anordnung von zumindest einer Aussparung (3, 3') in dem Blickschutzfilterelement (2), wobei der Aussparung (3, 3') zumindest ein erstes magnetisch wirksames Element (4, 4', 20) zugeordnet wird, und wobei die Aussparung (3, 3') so ausgebildet wird, dass sich ein zweites magnetisch wirksames Element (9) an der Anlageseite (5) zumindest teilweise in der Aussparung (3, 3') aufnehmen lässt,
- Bereitstellung des zweiten magnetisch wirksamen Elements (9), wobei vorzugsweise auf einer Seite des zweiten magnetisch wirksamen Elements (9) ein Klebemittel (7) angeordnet wird.

14. Verfahren zur Befestigung eines Blickschutzfilters (1) nach einem der Ansprüche 1 bis 9 an einem Bildschirm (12) mit zumindest den folgenden Schritten:
- Anordnung zumindest eines zweiten magnetisch wirksamen Elements (9) an einem Bildschirm (12),
- Zusammenbringen des zweiten magnetisch wirksamen Elements (9) mit einem ersten magnetisch wirksamen Element (4, 4', 20) des Blickschutzfilters (1), um den Blickschutzfilter (1) lösbar an dem Bildschirm (12) zu befestigen, wobei das zweite magnetisch wirksame Element (9) zumindest teilweise in einer dem ersten magnetisch wirksamen Element (4, 4', 20) zugeordneten Aussparung (3, 3') des Blickschutzfilters (1) aufgenommen wird.

15. Elektronisches Gerät (8) mit einem Blickschutzfilter (1) nach einem der Ansprüche 1 bis 9, insbesondere einem Blickschutzfilterset (13) nach einem der Ansprüche 10 bis 12, wobei zumindest ein an einem Bildschirm (12) angeordnetes und davon vorstehendes zweites magnetisch wirksames Element (9) mit einem magnetisch wirksamen ersten Element (4, 4', 20) des Blickschutzfilters (1) zusammenwirkt, um den Blickschutzfilter (1) an dem Bildschirm (12) lösbar zu befestigen, wobei das zweite magnetisch wirksame Element (9) zumindest teilweise in einer dem ersten magnetisch wirksamen Element (4, 4', 20) des Blickschutzfilters (1) zugeordneten Aussparung (3, 3') des Blickschutzfilters (1) aufgenommen ist.

## Claims

1. A privacy screen filter (1) for attachment to a display screen (12) with a flat privacy screen filter element (2) with a contact side (5) and a viewing side (6) and at least one recess (3, 3'), wherein the recess (3, 3') is assigned a first magnetically active element (4, 4', 20) arranged on the privacy screen filter (1), and wherein the recess (3, 3') is formed to at least partially accommodate therein a second magnetically active element (9) on the contact side (5).

2. The privacy screen filter according to claim 1, wherein the recess (3, 3') has a depth (t) of at least 0.80 mm, preferably at least 0.84 mm, or at least 0.90 mm.

3. The privacy screen filter according to claim 1 or 2, wherein the recess (3) completely penetrates the flat privacy screen filter element (2) from the contact side (5) to the viewing side (6).

4. The privacy screen filter according to any one of the preceding claims, wherein the first magnetically active element (4, 20) is arranged on the viewing side (6).

5. The privacy screen filter according to any one of the preceding claims, wherein the first magnetically active element (4, 20) completely covers at least the recess (3).

6. The privacy screen filter according to any one of the preceding claims, wherein the first magnetically active element (4, 20) projects at least partially beyond an edge region (14) of the recess (3).

7. The privacy screen filter according to claim 1 or 2, wherein the recess (3') is a cavity (3') and wherein the cavity (3') is arranged on the contact side (5).

8. The privacy screen filter according to claim 7, wherein the first magnetically active element (4') is arranged in the cavity (3').

9. The privacy screen filter according to any one of the preceding claims, wherein the first magnetically active element (4') is implemented by means of a ferrite lacquer, preferably in the cavity (3').

10. A privacy screen filter set (13), comprising a privacy screen filter (1) according to any one of the preceding claims and at least one second magnetically active element (9) assigned to a first magnetically active element (4, 4', 20) of the privacy screen filter (1), wherein preferably the second magnetically active element (9) comprises on one side an adhesive means (7) for attachment to a display screen (12), in particular to a display screen housing (10).

11. The privacy screen filter set according to claim 10, wherein the second magnetically active element (9) is formed to be at least partially accommodated in a recess (3, 3') of the privacy screen filter (1) and/or to protrude beyond the display screen (12).

12. The privacy screen filter set according to claim 11, wherein the recess (3, 3') is formed to accommodate the second magnetically active element (9) therein in such a manner that the second magnetically active element (9) is counter-sunk in a surface of the contact side (5).

13. A method for producing a privacy screen filter (1) according to any one of claims 1 to 9, comprising at least the following steps:
- providing a flat privacy screen filter element (2) with a contact side (5) and a viewing side (6),
- arranging at least one recess (3, 3') in the privacy screen filter element (2), wherein the recess (3, 3') is assigned at least one first magnetically active element (4, 4', 20), and wherein the recess (3, 3') is formed in such a manner that a second magnetically active element (9) on the contact side (5) can be accommodated at least partially in the recess (3, 3'),
- providing the second magnetically active element (9), wherein an adhesive means (7) is preferably arranged on one side of the second magnetically active element (9).

14. A method for attaching a privacy screen filter (1) according to any one of claims 1 to 9 to a display screen (12), comprising at least the following steps:
- arranging at least one second magnetically active element (9) on a display screen (12),
- bringing the second magnetically active element (9) together with a first magnetically active element (4, 4', 20) of the privacy screen filter (1) in order to detachably attach the privacy screen filter (1) to the display screen (12), wherein the second magnetically active element (9) is at least partially accommodated in a recess (3, 3') of the privacy screen filter (1) assigned to the first magnetically active element (4, 4', 20).

15. An electronic device (8) with a privacy screen filter (1) according to any one of claims 1 to 9, in particular a privacy screen filter set (13) according to any one of claims 10 to 12, wherein at least one second magnetically active element (9) arranged on a display screen (12) and projecting therefrom cooperates with a magnetically active first element (4, 4', 20) of the privacy screen filter (1) in order to detachably attach the privacy screen filter (1) to the display screen (12), wherein the second magnetically active element (9) is at least partially accommodated in a recess (3, 3') of the privacy screen filter (1) assigned to the first magnetically active element (4, 4', 20) of the privacy screen filter (1).

## Revendications

1. Filtre de confidentialité (1), destiné à être fixé sur un écran (12), pourvu d'un élément (2) de filtre de confidentialité plan, d'une face d'appui (5) d'une face apparente (6) et d'au moins une cavité (3, 3'), à la cavité (3, 3') étant associé un premier élément (4, 4', 20) à effet magnétique, placé sur le filtre de confidentialité (1) et la cavité (3, 3') étant conçu pour recevoir au moins partiellement en son intérieur sur la face d'appui (5) un deuxième élément (9) à effet magnétique.

2. Filtre de confidentialité selon la revendication 1, la cavité (3, 3') présentant une profondeur (t) d'au moins 0,80 mm, de préférence, d'au moins 0,84 mm, ou d'au moins 0,90 mm.

3. Filtre de confidentialité selon la revendication 1 ou 2, la cavité (3) traversant totalement l'élément (2) de filtre de confidentialité plan, de la face d'appui (5) jusqu'à la face apparente (6).

4. Filtre de confidentialité selon l'une quelconque des revendications précédentes, le premier élément (4, 20) à effet magnétique étant placé sur la face apparente (6).

5. Filtre de confidentialité selon l'une quelconque des revendications précédentes, le premier élément (4, 20) à effet magnétique recouvrant totalement la cavité (3).

6. Filtre de confidentialité selon l'une quelconque des revendications précédentes, le premier élément (4, 20) à effet magnétique saillant au moins partiellement au-delà de la zone de bordure (14) de la cavité (3).

7. Filtre de confidentialité selon la revendication 1 ou 2, la cavité (3') étant une cavité (3') et la cavité (3') étant placée sur la face d'appui (5).

8. Filtre de confidentialité selon la revendication 7, le premier élément (4') à effet magnétique étant placé dans la cavité (3').

9. Filtre de confidentialité selon l'une quelconque des revendications précédentes, le premier élément (4') à effet magnétique étant réalisé à l'aide d'une peinture ferrite, de préférence dans la cavité (3').

10. Kit de filtre de confidentialité (13), comprenant un filtre de confidentialité (1) selon l'une quelconque des revendications précédentes, ainsi qu'au moins un deuxième élément (9) à effet magnétique associé à un premier élément (4, 4', 20) à effet magnétique du filtre de confidentialité (1), de préférence le deuxième élément (9) à effet magnétique comprenant sur une face un agent adhésif (7), destiné à la fixation sur un écran (12), notamment sur un boîtier d'écran (10).

11. Kit de filtre de confidentialité selon la revendication 10, le deuxième élément (9) à effet magnétique étant conçu pour être reçu au moins partiellement dans une cavité (3, 3') du filtre de confidentialité (1) et/ou pour saillir au-delà de l'écran (12).

12. Kit de filtre de confidentialité selon la revendication 11, la cavité (3, 3') étant conçu pour recevoir en son intérieur le deuxième élément (9) à effet magnétique, de telle sorte que le deuxième élément (9) à effet magnétique soit noyé dans une surface de la face d'appui (5).

13. Procédé, destiné à produire un filtre de confidentialité (1) selon l'une quelconque des revendications 1 à 9, présentant au moins les étapes suivantes, consistant à :
- mettre à disposition un élément (2) de filtre de confidentialité, pourvu d'une face d'appui (5) et d'une face apparente (6),
- placer au moins une cavité t (3, 3') dans l'élément (2) de filtre de confidentialité, à la cavité (3, 3') étant associé au moins un premier élément (4, 4', 20) à effet magnétique et la cavité (3, 3') étant conçu de telle sorte, qu'un deuxième élément (9) à effet magnétique puisse être reçu au moins partiellement dans la cavité (3, 3'), sur la face d'appui (5),
- mettre à disposition en option au moins un deuxième élément (9) à effet magnétique, de préférence sur une face du deuxième élément (9) à effet magnétique étant placé un agent adhésif (7).

14. Procédé, destiné à fixer un filtre de confidentialité (1) selon l'une quelconque des revendications 1 à 9 sur un écran (12), présentant au moins les étapes suivantes, consistant à :
- placer au moins un deuxième élément (9) à effet magnétique sur un écran (12),
- rassembler le deuxième élément (9) à effet magnétique avec un premier élément (4, 4', 20) à effet magnétique sur le filtre de confidentialité (1), pour fixer de manière amovible le filtre de confidentialité (1) sur l'écran (12), le deuxième élément (9) à effet magnétique étant reçu au moins partiellement dans une cavité (3, 3') du filtre de confidentialité (1) associé au premier élément (4, 4', 20) à effet magnétique.

15. Appareil électronique (8), pourvu d'un filtre de confidentialité (1) selon l'une quelconque des revendications 1 à 9, notamment d'un kit de filtre de confidentialité (13) selon l'une quelconque des revendications 10 à 12, au moins un deuxième élément (9) à effet magnétique placé sur un écran (12) et saillant à partir de celui-ci interagissant avec un premier élément (4, 4', 20) à effet magnétique du filtre de confidentialité (1), pour fixer de manière amovible le filtre de confidentialité (1) sur l'écran (12), le deuxième élément (9) à effet magnétique étant reçu au moins partiellement dans une cavité (3, 3') du filtre de confidentialité (1) associé au premier élément (4, 4', 20) effet magnétique du filtre de confidentialité (1).
